## Europäisches Patentamt

## European Patent Office

## Office européen des brevets

(19)

(11) Veröffentlichungsnummer: **0 077 013**
**B1**

(12) **EUROPÄISCHE PATENTSCHRIFT**

(45) Veröffentlichungstag der Patentschrift:
**06.11.85**

(51) Int. Cl.⁴: **A 23 C 9/156**

(21) Anmeldenummer: **82109223.6**

(22) Anmeldetag: **06.10.82**

(54) Milchmixgetränk aus Milch handelsüblicher Konsumqualität und Früchten bzw. Fruchtanteilen.

(30) Priorität: **09.10.81 DE 3140111**

(43) Veröffentlichungstag der Anmeldung:
**20.04.83 Patentblatt 83/16**

(45) Bekanntmachung des Hinweises auf die Patenterteilung:
**06.11.85 Patentblatt 85/45**

(84) Benannte Vertragsstaaten:
**BE CH FR GB IT LI·NL**

(56) Entgegenhaltungen:
**GB - A - 1 440 161**
**GB - A - 1 476 283**
**US - A - 2 650 165**

**CHEMICAL ABSTRACTS, Band 78, Nr. 13, 2. April 1973, Seite 327, Nr. 83016u, Columbus, Ohio, USA, H. LUECK et al.: "Milk flavored with natural fruit juice"**

(73) Patentinhaber: **Korn, Helmut, Ing.-grad., Wolfsgrabenstrasse 32, D-6480 Wächtersbach 1 (DE)**

(72) Erfinder: **Korn, Helmut, Ing.-grad., Wolfsgrabenstrasse 32, D-6480 Wächtersbach 1 (DE)**

(74) Vertreter: **Munderich, Paul, Dipl.-Ing., Frankfurter Strasse 84, D-6466 Gründau-Rothenbergen (DE)**

ACTORUM AG

## Beschreibung

Die Erfindung betrifft ein Milchmixgetränk aus Milch handelsüblicher Konsumqualität und Früchten bzw. Fruchtanteilen.

Solche Milchmixgetränke sind in vieler Zahl bekannt.

Sie sind nicht nur als Getränke und Genussmittel anzusprechen, sondern sie bilden heute eine wichtige Gruppe innerhalb des Bereiches «flüssiger Nahrungsmittel», deren Nährstoff- und Vitamingehalt durch die Fruchtauswahl weitgehend variabel ist.

Vielfach störend ist jedoch der bei den meisten Fruchtarten wirksam werdende hohe Säuregehalt, der den Fruchtanteil, bezogen auf die Milchmenge, bereits im Hinblick auf die Verarbeitung bzw. Herstellung beschränkt und der zur Übersäuerung des Magens führen kann.

Es ist deshalb Aufgabe dieser Erfindung, ein Milchmixgetränk der eingangs beschriebenen Art zu nennen, dessen Fruchtanteil relativ hoch ist, ohne dass säurebedingte Schwierigkeiten oder verstärkte Magensäurebildung gegeben sind.

Die erfindungsgemässe Lösung dieser Aufgabe sieht vor, dass entweder Vollmilch oder teilentrahmte Milch mit dem zerkleinerten Fruchtfleisch und/oder dem Saft von Mango- und Guayavafrüchten vermengt sind, wobei der Anteil jeder Frucht in Fruchtfleisch- oder Saftform zwischen 3 und 15 Vol.%, bezogen auf die Milchmenge, beträgt und das Verhältnis der Anteile aus jeder Frucht, bezogen auf die Gesamtfruchtmenge, zwischen 1 : 5 bzw. 5 : 1 eingestellt ist.

Um den leicht terpentinartigen Geschmack des Mango-Fruchtanteiles zu eliminieren, ist vorgesehen, dass das Milchmixgetränk eine Temperatur von 4° bis 12°C, bei der Entnahme aus dem Kühlgerät, aufweist.

Ein solches Getränk kann ungezuckert oder auch leicht nachgezuckert genossen werden.

Der geringe Fruchtsäuregehalt der vorgeschlagenen Früchte mindert die Gerinnungsgefahr und unterdrückt eine übersteigerte Magensäurebildung.

Das Getränk hat darüberhinaus noch den Vorteil, dass es relativ kräftigend ist, so dass eine schnelle Stärkung und Abhilfe von Erschöpfungszuständen ermöglicht werden.

Das Getränk eignet sich insbesondere auch für Frühaufsteher, die keine Zeit haben oder noch nicht bereit sind, feste Nahrung zu sich zu nehmen, und für Schulkinder als Erstfrühstück.

Der sehr hohe Nährstoff- und Vitamingehalt ermöglicht die Bewahrung der körperlichen Frische bis zur späteren normalen Nahrungsaufnahme.

Anstelle von Milch handelsüblicher Konsumqualität kann entrahmte Milch, Molke oder dergleichen Milchprodukte ganz oder in Anteilen verwendet werden.

Abschliessend wird alternativ vorgeschlagen, dass das Merkmal «Vollmilch oder teilentrahmte Milch» durch des Merkmal «entrahmte Milch oder Molke» ersetzt ist.

Das erfindungsgemässe Milchmixgetränk wird nachstehend durch eine beispielsweise Rezeptur näher erläutert.

A) Vollmilch mit 3,5% Fettgehalt ca. 70 Vol.%
B) Zerkleinerte und hierbei teilentsaftete Mangofrüchte, einschliesslich freiem Saftanteil ca. 15 Vol.%
C) Zerkleinerte und hierbei teilentsaftete Guayava-Früchte, einschliesslich freiem Saftanteil ca. 15 Vol.%
ergibt 100 Vol.% - Anteile zusammenführen und mit Mixer intensiv mischen.
In üblicher Milchlagertemperatur halten und vor dem Gebrauch auf etwa 8°C abkühlen lassen.

## Patentansprüche

1. Milchmixgetränk aus Milch handelsüblicher Konsumqualität und Früchten bzw. Fruchtanteilen, dadurch gekennzeichnet, dass entweder Vollmilch oder teilentrahmte Milch mit dem zerkleinerten Fruchtfleisch und/oder dem Saft von Mango- und Guayavafrüchten vermengt sind, wobei der Anteil jeder Frucht in Fruchtfleisch- oder Saftform zwischen 3 und 15 Vol.%, bezogen auf die Milchmenge, beträgt und das Verhältnis der Anteile aus jeder Frucht, bezogen auf die Gesamtfruchtmenge, zwischen 1 : 5 bzw. 5 : 1 eingestellt ist.

2. Milchmixgetränk nach Anspruch 1, dadurch gekennzeichnet, dass das Milchmixgetränk eine Temperatur von 4° bis 12°C, bei der Entnahme aus dem Kühlgerät, aufweist.

3. Milchmixgetränk nach Anspruch 1, dadurch gekennzeichnet, dass das Merkmal «Vollmilch oder teilentrahmte Milch» durch das Merkmal «entrahmte Milch oder Molke» ersetzt ist.

## Claims

1. A milk shake made of milk of a commercial consumer quality and fruits or fruit shares, characterized in that either full-cream milk or partially skimmed milk is admixed to the cut pulp and/or the juice of mango and guava fruits, with the share of each fruit in the form of pulp or juice being between 3 and 15% by volume, based on the amount of milk, and with the ratio of the shares of each fruit, based on the overall fruit quantity being adjusted to between 1 : 5 and 5 : 1, respectively.

2. A milk shake according to claim 1, characterized in that the milk shake has a temperature of between 4° and 12°C when taken from the refrigerator.

3. A milk shake according to claim 1, characterized in that the «full-cream milk or partially skimmed milk» feature is replaced by the feature «skimmed milk or whey».

## Revendications

1. Boisson de mix au lait faite du lait de qualité consumeur d'usage, et des fruits respectivement des parts de fruits, caractérisée en ce qu'on mélange du lait ou entier ou écrémé partiellement avec la pulpe coupée et/ou le jus des fruits de mangoustan et guava, la portion de chaque fruit sous forme de pulpe ou jus étant entre 3 et 15 pour cent en volume par rapport à la quantité de lait, et la relation des portions de chaque fruit, par rapport à la quantité de fruits entière étant entre 1 : 5 respectivement 5 : 1.

2. Boisson de mix au lait selon la revendication 1, caractérisée en ce que la boisson de mix au lait a une température de 4° à 12°C à la prise du réfrigérateur.

3. Boisson de mix au lait selon la revendication 1, caractérisée en ce que la caractéristique «du lait ou entier ou écrémé partiellement» est remplacé par la caractéristique «du lait écrémé ou du petit-lait».